(19) Europäisches Patentamt
European Patent Office
Office européen des brevets

(11) Publication number: 0 174 617
A2

(12) # EUROPEAN PATENT APPLICATION

(21) Application number: 85111292.0

(22) Date of filing: 06.09.85

(51) Int. Cl.[4]: C 10 M 161/00
C 10 M 169/04, G 02 B 6/44
//(C10M161/00, 125:26, 143:00, 147:02), (C10M169/04, 107:02, 125:26, 143:00, 147:02), C10N40:00

(30) Priority: 10.09.84 US 649050
03.12.84 US 677888

(43) Date of publication of application:
19.03.86 Bulletin 86/12

(84) Designated Contracting States:
AT BE CH DE FR GB IT LI LU NL SE

(71) Applicant: Randisi, Sal
129 Autumn Drive
Hauppauge New York 11787(US)

(72) Inventor: Randisi, Sal
129 Autumn Drive
Hauppauge New York 11787(US)

(74) Representative: Wasmeier, Alfons et al,
Patent Attorneys A. Wasmeier H. Graf Postfach 382
Greflingerstrasse 7
D-8400 Regensburg 1(DE)

(54) **Optical wave guide compounds.**

(57) Compositions are provided which are water resistant, soft at both ends of a wide temperature spectrum, i.e. −60°C to +345°C, compatible with the materials of which fiber optic units are formed, and are made from a mixture of a lubricating fluid, particularly a natural or synthetic hydrocarbon petroleum distillate, approximately 1% polybutene, a silicon dioxide thickener, and optionally, polytetrafluoroethylene. Other materials, such as coloring agents, can also be employed.

FIG. 1

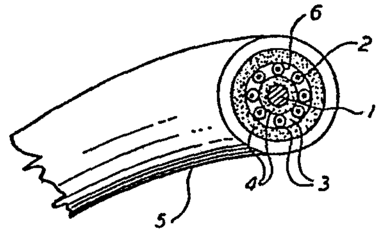


EP 0 174 617 A2

## Field of the Invention

Increasingly in modern day technology, especially in the technology employing beams of light for the transmission of data, or other communications, fiber optics are being employed. Since the fiber optic element, itself, is generally relatively fragile, in order to employ it, one or more such fiber optic elements are held together in a bundle and the bundle is inserted into a protective tube, such as a polyethylene jacket.

The fiber optic elements, however, cannot be merely allowed to remain loose in a jacket of the type referred to. If such were to be the case, then almost any kind of mechanical shock or bending could result in damage to or breakage of the fiber optic element. In view of the substantial length of many of these presently used fiber optic data transmission cables, replacement or repair to the fiber optic elements would be both difficult and expensive.

Accordingly, means must be provided for cushioning of the fiber optic elements within the jacket in which such elements are carried from one point to another.

In providing lubrication for or cushioning of the fiber optic elements which are carried in a jacket or sheath, care must be taken to assure that the optical qualities of the fiber optic elements are not diminished. Thus, in formulating a lubricant or cushioning agent for use with fiber optic elements carried in a sheath, the formulation must provide, not only, the necessary lubrication or cushioning, but must also not deleteriously affect the optical qualities of the

"Compounds used with fiber optics should be also compatible with sea water immersion, fresh water immersion, and alkali immersion to pH 13. These compounts must also be free of air entrapment, and exhibit excellent adhesion - cohesion characteristics. These compounds must remain soft at both ends of the temperature spectrum, and afford extremely low attenuation. These compounds must also be waterproof and be suitable for use as a moisture barrier. These compounds must also be good dielectrics."

A composition of matter which will satisfy all of these various requirements, is thus the object of the present invention.

Description of the Invention

In accordance with the present invention, an optical wave guide compound has been developed which satisfies the various requirements for such a material, including the provision of sufficient lubricity or cushioning for a fiber optic element, or series of such elements, placed within a jacket, minimal or no interference with the optical properties of the optical fiber elements so contained, and a material which is both non-toxic and non-melting.

The composition of the material of the present invention, which will hereinafter be referred to as a fiber optic lubricating composition, includes, as the major component, a lubricating fluid, such as a natural or synthetic petroleum distillate. Included in the composition is a thickening agent, particularly, a silicon dioxide powder, such as a fumed silica. Further, the composition can contain a finely divided, polymeric fluorocarbon powder, such as polytetrafluoroethylene (for example, of the type sold under the trademark Teflon), and may contain various additives, such as coloring agents, etc.

While the materials just recited are important to the composition, and, to a great extent, are set forth in applicant´s prior United States Patent, US-PS 4.396.a514 issued August 2, 1983, and entitled "Lubricating Composition and Method of Making", the critical component of the composition of the present invention is polybutene, particularly, a polybutne oil of moderate to high viscosity and tackiness. The inclusion of this material having the formula:

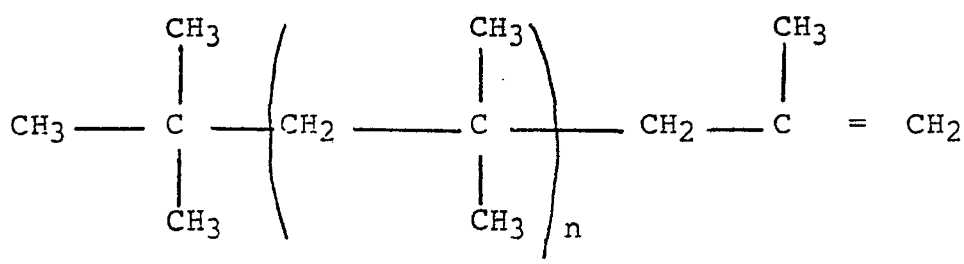

wherein n is from about 15 to 35, provides the necessary lubricity and cushioning for use in connection with the fiber optic elements. The amount of the polybutene contained in the formulation should be approximately 1%, with a permissible variation of approximately 10%. While the value of n in the formulation set forth above has been given as from 15 to 35, the preferable value of n is from about 20 to 25.

It has been found that the method of forming the lubricant and cushioning composition of the present invention is preferably that set forth in the afore-referenced US-Patent 4.396.514, and that portion of that reference is herein incorporated by reference.

**Description of Drawings**

Fig. 1 shows a typical construction of a cable employing fiber optics.

Fig. 2 shows a schematic of an extrusion process.

**Description of the preferred Embodiments**

In accordance with the present invention, a fiber optic lubricating composition for use with optical fiber elements contained in a jacket includes the following:

a) a hydrocarbon lubricating liquid;

b) a silicon dioxide in the form of a finely divided silica powder with particles ranging from about 7 to about 40 millimicrons in size, said silicon dioxide comprising from about 2 to 10% of said composition;

and

c) an oily polybutene having the formula:

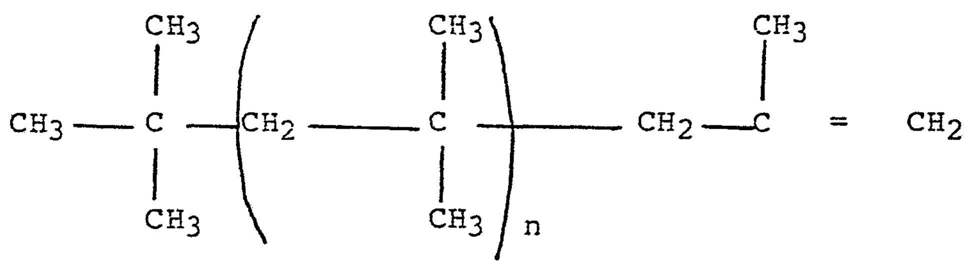

where n is from about 15 to about 35, preferably from about 20 to 25, said polybutene comprising approximately 1%, by weight of the total composition.

Said fiber optic composition may also contain a finely divided, polymeric, fluorocarbon powder comprising polytetrafluorethylene in the form of particles ranging from 0,1 to 100 microns in size and having a melting temperature above 230° C, said polymeric fluorocarbon powder comprising from about 0 to about 3% of said composition.

As previously indicated, the preferred method for forming the composition of the present invention is through use of a disc impeller at elevated temperatures as set forth in the afore-referenced US-Patent 4.396.514. With regard to method of formation, that portion of the afore-referenced patent is herein incorporated by reference.

The lubricating fluid employed in this invention may comprise a natural petroleum distillate including various grades of grease and oil and/or may also comprise a synthetic petroleum distillate or synthesized hydrocarbon. The synthesized

hydrocarbons preferred for use in this invention are low molecular weight saturated polyalphaolefins and hydrogenated oligomers of short chain normal alphalolefins. These synthetic hydrocarbon lubricating fluids are readily available commercial commodities. They are marketed by Uniroyal under the trade name "Uniroyal PAO" and by Gulf Petrochemicals under the tradename "Synfluid"; both fluids are available in different grades or weights. It is preferred for this invention that a blend of about 6 and 40 weight oil be used. It is also contemplated that these synthetic hydrocarbons may be used in the practice of this invention either purely by themselves or intermixed with natural petroleum distillates.

The use of these synthetic fluids insures a highly pure lubricating fluid which additionally helps conserve shrinking world supplies of natural petroleum reserves.

Any polymeric fluorocarbon powder can be used in this invention provided it is characterized by a high melting point, i.e., above 230° C, and consists of finely divided particles whose average size ranges from submicron (e.g. about 0,1 micron) to 100 micron size. Preferably, these particles will have an average particle size of about 0,7 micron. Preferred are the polymeric fluorocarbons selected from the group consisting of polytetrafluoroethylene (TFE) and fluorinated ethylene propylene (FEP) copolymer. The polymeric fluorocarbon compounds operable in this invention may be purchased as readily available commercial commodities under such trade names as "TFE Teflon" and "FEP Teflon". The polytetrafluoroethylene is a polymer of a fully fluorinated hydrobcarbon of the basic chemical formula (---$CF_2$---$CF_2$---) containing 71 percent by weight of fluorinated ethylene. The propylene copolymer is a fully fluorinated resin prepared by polymerization of tetrafluoroethylene and hexafluoropropylene to form a copolymer containing about 5 to about 50 weight percent hexafluoropropylene and about 95 to about 50 weight percent tetrafluoroethylene. These copolymers have respective

melting points ranging from about 250° C to about 290° C. Especially preferred for use in this invention is polytetrafluoroethylene (PTFE).

It is preferable that the polymeric fluorocarbon comprises up to about 3% of the lubricating composition. It is also contemplated that higher percentages can be used in the practice of the invention.

The silicon dioxide or fumed silica of the disclosed invention is produced from silicon tetrachloride in a flame hydrolysis process with oxygen-hydrogen gas. This process produces highly dispersed silicon dioxide of amorphous structure and great purity with controlled particle size. The finely divided fumed silica powder has particles which may range from about 7 to 40 millimicrons in size. It has also suprisingly been found that silicon dioxide particulates of such small size do not have abrasive characteristics. The preferred size particle for this invention ranges from 12-16 millimicons. Particles of various sizes may be intermixed in the lubricating composition or may all be of approximately the same size. The fumed silica powder is a readily available commercial product of the Degussa Corporation and is marketed under the trade name "Aerosil".

The extreme thixotropic filler action of the fumed silica powder is a function of the silanol groups present on the surface of the particles in optimal density and their propensity to form hydrogen bonds. This characteristic may, in large part, account for the great stability of the dispersion comprising the lubricating composition and thereby prevent the settling out or separating of the polymeric fluorocarbon powder from the lubricating fluid. Furthermore, the electrical conductivity of the fumed silica is very poor and qualifies it in effect as an insulator. Even under adverse conditions (i.e. an exceptionally high moisture content), the electrical resistivity of the fumed silica is still about $10 \times 10^{12}$ Ohm x cm at packed densities of 50 -60 g/l. This property greatly contributes to the high electrical

resistance of the lubricating composition of which it is an integral part. It is preferred that the silicon dioxide or fumed silica particles comprise from about 2% to about 10% of the lubricating composition.

The polybutene employed in accordance with the present invention, in amounts of about 1% based upon the total height, is an inert oil of moderate to high viscosity and tackiness. The amount of polybutene which can be incorporated can vary within + 10% of the preferred amount. The polybutene has the formula:

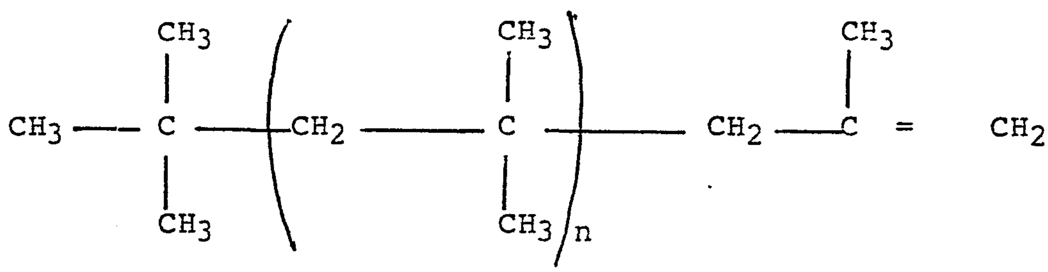

where n is from 15 to 35, preferably from about 20 to 25. The average molecular weight of the material is thus between about 1.000 and 2.000, preferably in the range of about 1.500.

A preferred material for use in connection with the present invention is the material sold by Chevron Chemical Company under the designation polybutene grade 32. The properties of this polybutene are as follows:

| Properties | Test Method | Value |
|---|---|---|
| Physical Condition | Visual | * |
| Color, Gardner | ASIM D 1544 | 1 |
| Specific Gravity at 15/15° C | ASIM D 287 | 0.905 |
| Pounds/Gallon at 15/15° C | | 7.54 |
| Number Average mol. wt. Mechrolab Osmometer | SM 180-6 | 1.400 |

| Properties | Test Method | Value |
|---|---|---|
| Molecular Wt | | |
| Dispersion Index | SM 180-6 | 18 |
| Viscosity 40-C SUS | ASIM D 445 | 108.500 |
| Viscosity 40-C cSl | and D 446 | 23.400 |
| Viscosity 100-C SUS | ASIM D 445 | 2.820 |
| Viscosity 100-C cSl | and D 446 | 604 |
| Viscosity Index | ASIM D 567 | 118 |
| Flash Point $^{\circ}$ C | ASIM D 92 | 224 |
| Fire Point $^{\circ}$ C | ASIM D 92 | 271 |
| Pour Point $^{\circ}$ C | ASIM D 97 | 4 |
| Loss on Heating $^{\circ}$O (Five Hr. 100$^{\circ}$C) | ASIM D 6 | 0.4 |
| Coefficient of Thermal Expansion per $^{\circ}$C (15$^{\circ}$C - 100$^{\circ}$ C) | SM 15-23 | 0.00066 |
| Chemical Bromine No. g/100 g | SM 20-28 | 13 |
| Neut Value mg KOH/g | ASIM D 664 | 0.01 |
| Organic Chloride as Chlorine, Wt% | SM 205-12 | 0.003 |
| Inorganic Chlorides and Sulfates | ASIM D 878 | None |
| Total Sulfur % | ASIM D 1552 | 0.01 |
| Carbon Residue % | ASIM D 189 | None |
| Water Content, ppm | ASIM D 1533 | 40 |

*Clear, bright and free from sediment of suspended matter.

The compositions formed in accordance with the present invention are thixotropic and operable over an extremely wide temperature range, i.e., from about -60$^{\circ}$ C to +345$^{\circ}$ C. They are water resistant, remain soft at both ends of the temperature spectrum, and afford zero attenuation. Some of the compounds are compatible with sea water immersion, fresh

water immersion, alkali immersion to pH 13, and to mild acid immersion for short durations. They are compatible with a variety of jacket materials, including polypropylene, polyethylene, and polycarbonate materials.

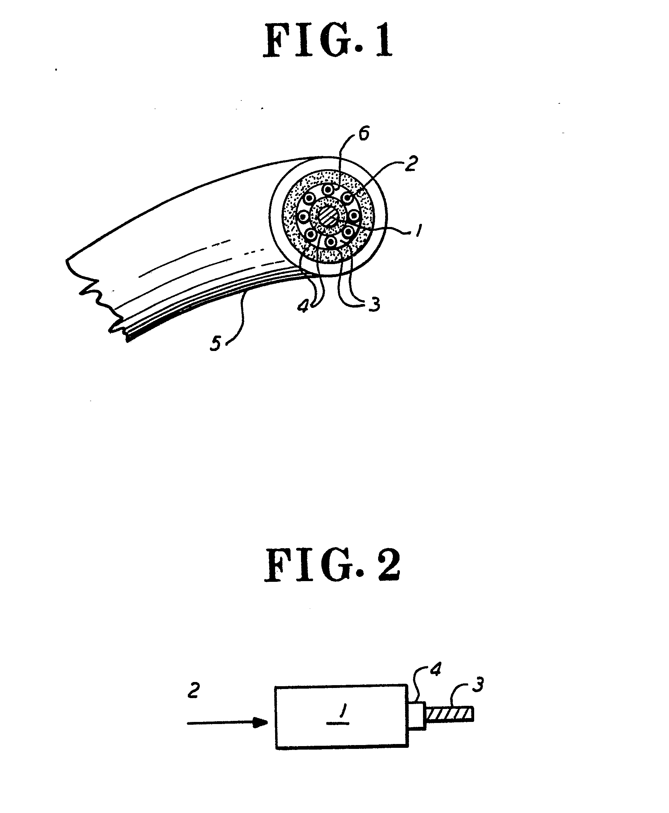

Fig. 1 illustrates a fiber optic structure. In the center of the structure a tension member or support rod is placed, constructed of a strong material such as steel rod. Surrounding this member are optical fiber elements 2 constructed of fiber optic material. A buffer layer of the composition of this invention is placed between the fiber optic and tension member to properly buffer and support the fiber optics. These are placed in a protective tube 6 which is placed within a stronger protective tube 5 with the composition 3 of this invention placed between them. The materials of this invention are also placed around the individual fibers 2 and protective casing 6 to support the fiber and also to prevent attenuation of the light beam. The composition 3 placed between the fiber optic and the first protective tube, and placed between a plurality of first protective tubes and a second protective tube may be the same or different depending on the requirements of support and also depending on the dieletric qualities needed. An example would be where the composition 3 between the fiber optic and first protective tube is a composition for use with fiber optic elements comprising a stable dispersion of:

a) A hydrocarbon lubricating liquid;
b) a silicon dioxide in the form of a finely divided silica powder with particles ranging from about 7 to about 40 millimicrons in size, said silicon dioxide comprising from about 2 to 10% of said composition;
c) an oily polybutene having the formula:

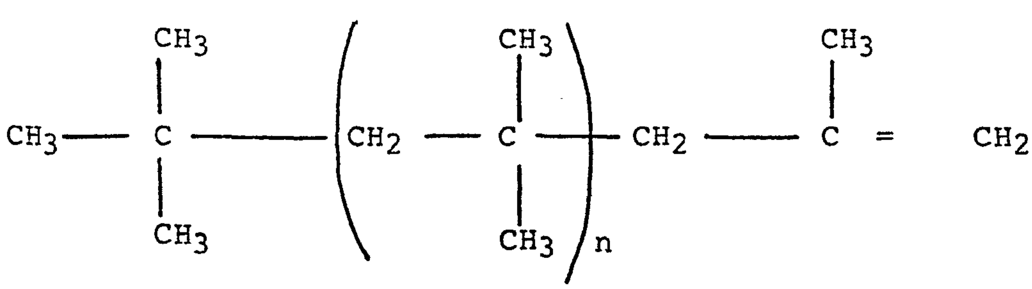

where n is form about 15 to about 35, said polybutene comprising approximately 1%, by weight, of said composition, and the composition 3 between the plurality of first protective tubes and a second protective tube is a composition for use with fiber optic elements comprising a stable dispersion of:

a) a hydrocarbon lubricating liquid;
b) a silicon dioxide in the form of a finely divided silica powder with particles ranging from about 7 to about 40 millimicrons in size, said silicon dioxide comprising from about 2 to 10% of said composition;
c) an oily polybutene having the formula:

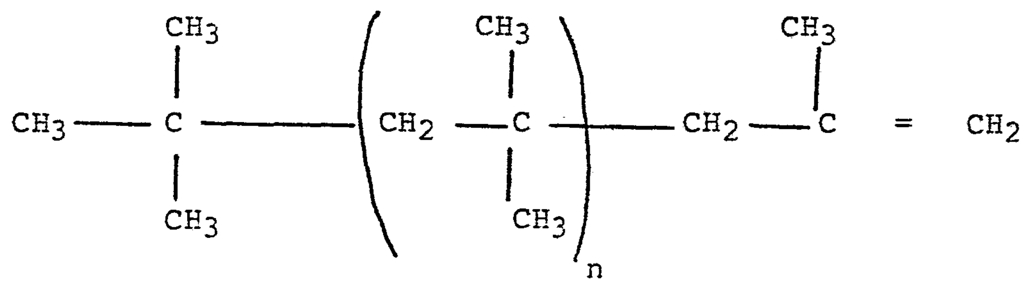

where n is from about 15 to about 35, said polybutene comprising approximately 1% by weight, of said composition, including a finely divided polymeric, flurocarbon powder comprising polytetrafluoroethylene in the form of particles ranging from 0.1 to 100 microns in size and having a melting temperature above 230 C, said polymeric flurocarbon powder comprising from about 0 to about 3% of said composition.

It will be understood that the composition may be used with the fiber optic structure shown in Fig. 1 or any other fiber optic or similar structure.

Fig. 2 illustrates schematic of the extrusion process and shows the structure forming.

As shown in Fig. 1 and 2, Figure 1 illustrating the fiber optic unit and Figure 2 illustrating the extrusion process. As shown in Figs. 1 and 2, to employ the compositions of the present invention, they are generally introduced into the extrusion die head 10 of an extruder 9 which also carries the optical fiber elements as shown in Fig. 1 and the molten polymer which is used to form the jacket 5. By employment in this way, the composition encases the optical fiber elements and flood inner portion of the jacket that is the area 3 with dielectric material of this invention. The composition thus reduces the movement of the optical fiber elements within the jacket, so as to control any attentuation that may arise due to movement, permitting control of attentuation to less than 4 dB/km, and industry requirement. It also creates a moisture barrier and discourages moisture accumulation within the jacket.

If moisture accumulation is not prevented, the moisture may attack the acrylate cladding which is generally formed on the optical fiber elements, causing signal distortion and attentuation. Thus, the waterproofing properties of the composition of the present invention are essential to the integrity of the overall optical fiber construction and to signal stability.

Particularly when more than one optical fiber element is included in the overall cable construction, the compositions of the present invention act as lubricants. Thus, the compositions cushion and reduce the amplitude of movement within the jacket of the multi-filament construction.

The compositions of the present invention meet the specifications listed below:

| Property (Test Method) Specifications: | Value: |
|---|---|
| Operating temperature | (-60°C to 345°C) -75°F to 650° F |
| Viscosity - (Penetrometer) | From 275 + 10 to 330 + 10 |
| Dropping Point (°F ASIM D-566 in Heat Chamber) | No melt |
| Color | White Translucent to Olive Green |
| Texture | Smooth - Buttery |
| Odor | None |
| pH (Base Fluid) | 7.5 |
| Rust test (Inhibited - rust and corrosion) ASIM D-1743 | Pass |
| Oxidation (Inhibited) ASIM D-942) | 0 |
| Water Resistance (ASIM D-1264) | 100% water resistant |
| Effect on copper (ASIM D-1261) | 0 |
| Effect on fiber coatings (corning test) | 0 |
| Oil Separation (ASIM D-1742 & FIM-781-B) | Less than 1/10 of 1% |
| D.C. Resistivity at 25°C Ohm-cm | $1700 \times 10^{12}$ |
| Insulation Resistance (Ohm-cm at 100 Volts) | $1\text{-}2 \times 10^{14}$ |
| Dielectric constant at $1mH_z$ | 2.10 |
| Compound Life (encapsulated) | undertermined - over 10 years |
| Evaporation Loss, Wgt% (22 hrs. at 149° C) (300° F) | Less than 0,3% |
| Gamma Radiation | $2 \times 10^8$ RAD |
| Dissipation Factor of ambient °F | 0.00064 |
| Density/Gallon | 8.725 |
| Dielectric dissipation factor of P.T.F.E. at $10^6$ | 2.0 - 2.1 |

| Property (Test Method) | Value |
|---|---|
| Polyethylene stress cracking test MS-17000 sec. 1078 | Pass |
| Air entrapment | None |
| Pumpability | 100% |
| Dry Heat Aging | 0 |
| Slump | 0 |
| Non Toxic | |

The compositions set forth below are illustrative of the various embodiments of lubricating compositions falling within the present invention:

**Example 1**

| | |
|---|---|
| Polyalphaolefin Oil | 69.00 % |
| Mineral Oil U.S.P. | 17.00 % |
| PTFE | 3.00 % |
| Fumed Silica | 9.00 % |
| Polyethylene Glycol | 1.00 % |
| Polybutene Grade 32 | 1.00 % |
| | 100.00 % |

**Example 2**

| | |
|---|---|
| Polyalphaolefin Oil | 72.00 % |
| Mineral Oil U.S.P. | 17.00 % |
| Fumed Silica | 9.00 % |
| Polyethylene Glycol | 1.00 % |
| Polybutene Grade 32 | 1.00 % |
| | 100.00 % |

Color Polychrome Orange (Trace to Sample)

It is also within the contemplation of this invention to include small amounts of other compositions so as to complement or further increase the lubricating compositions

desirable characteristics as was detailed in the examples. Contemplated compositions include dyes, antioxidants, cationic surfactants, rust inhibitors, emulsifiers, attapulgite gelling agents, and imidazoline oleate.

As indicated, the compositions of the present invention are particularly useful in conjunction with fiber optic contructions. Especially, these compositions are useful for the lubrication and cushioning of fiber optic elements held within a polymeric jacket.

While specific embodiments of the invention have been shown and described, the invention should not be considered as limited except as indicated in the appended claims.

**Patent Claims:**

1. A composition for use with fiber optic elements comprising a stable dispersion of:
   a) a hydrocarbon lubricating liquid;
   b) a silicon dioxide in the form of a finely divided silica powder with particles ranging from about 7 to about 40 millimicrons in size, said silicon dioxide comprising from about 2 to 10% of said composition;
   c) an oily polybutene having the formula:

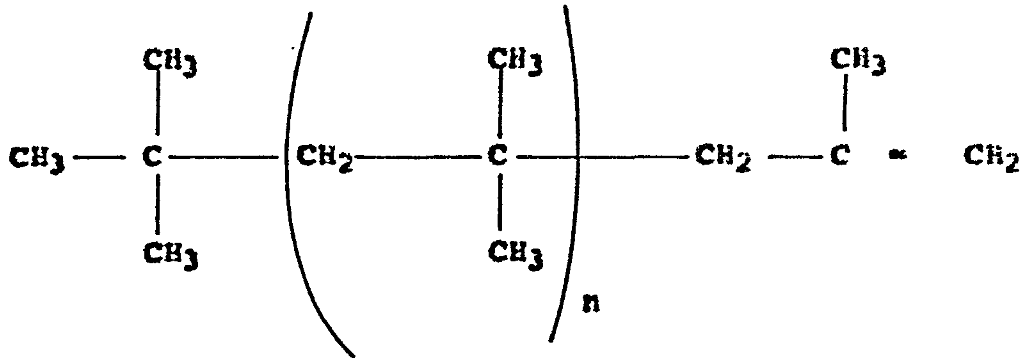

   where *n* is from about 15 to about 35, said polybutene comprising approximately 1% by weight, of said composition.

2. The composition of claim 1, wherein the lubricating liquid is a petroleum distillate.

3. The composition of claim 1, wherein the lubricating liquid is synthesized hydrocarbon.

4. The composition of claim 1, wherein the lubricating liquid comprises a petroleum distillate and a synthesized hydrocarbon.

5. The composition of claim 1, wherein n is from about 20 to 25.

6. The composition of claim 1 including a finely divided, polymeric, fluorocarbon powder comprising polytetrafluoroethylene in the form of particles ranging from 0.1 to 100

microns in size and having a melting temperature above 230° C, said polymeric fluorocarbon powder comprising from about 0 to about 3% of said composition.

7. The composition of claim 6, wherein the lubricating liquid is a petroleum distillate.

8. The composition of claim 6, wherein the lubricating liquid is synthesized hydrocarbon.

9. The compositin of claim 6, wherein the lubricating liquid comprises a petroleum distillate and a synthesized hydrocarbon.

10. The composition of claim 6, wherein n is from about 20 to 25.

11. A fiber optic unit comprising:
a) a plurality of fiber optics,
b) a plurality of first protective tubes, whereby each of said tubes surrounds each fiber optic,
c) a composition between the fiber optic and the first protective tube, and between the plurality of first protective tubes and a second protective tube for supporting the fiber optic and substantially maintaining the optical characteristics of the fiber optic, said composition being dielectric.

12. The fiber optic unit of claim 12, wherein the hydrocarbon lubricating liquid is a petroleum distillate.

13. The fiber optic unit of claim 12, wherein the hydrocarbon lubricating liquid is synthesized hydrocarbon.

14. The fiber optic unit of claim 12, wherein the hydrocarbon lubricating liquid comprises a petroleum distillate and a synthesized hydrocarbon.

15. The fiber optic unit of claim 12 wherein [illegible] to 25.

16. A method of fabricating a fiber optic unit and including:
a) providing an extrusion die,
b) providing a plurality of optical fibers to said die,
c) providing to said die materials to form a plurality of first protective tubes and a second protective tube,
d) providing a dielectric composition to said die, for use in said fiber optic unit to substantially maintain its optical characteristics,
e) extruding a fiber optic unit from said die with said composition between the first protective tube and the fiber optic, and between th plurality of first protective tubes and a second protective tube.

17. A method of claim 16, where composition between the fiber optic and the first protective tube is the compound of claim 1, and the composition between the first protective tube and the second protective tube is the composition of claim 1.

18. A method of claim 16, where the composition between the fiber optic and the first protective tube is the compound of claim 1, and the composition between the first protective tube and the second protective tube is the composition of claim 6.

19. A method claim 17, where composition between the fiber optic and the first protective tube is the compound of claim 6, and the composition between the first protective tubes and the second protective tube is the composition of claim 1.

20. A method claim 17, where composition between the fiber optic and the first protective tube is the compound of claim 6, and the composition between the first protective tubes and the second protective tube is the composition of claim 6.

21. The fiber optic unit of claim 18, wherein the hydrocarbon lubricating liquid is a petroleum distillate.

22. The fiber optic unit of claim 18, wherein the hydrocarbon lubricating liquid is synthesized hydrocarbon.

23. The fiber optic unit of claim 18, wherein the hydrocarbon lubricating liquid comprises a petroleum distillate and a synthesized hydrocarbon.

24. The fiber optic unit of claim 18, wherein n is from 20 to 25.

25. A fiber optic unit comprising:
a) a plurality of fiber optics,
b) a plurality of first protective tubes, whereby each of said tubes surrounds each fiber optic;
c) a composition between the fiber optic and the first protective tube supporting the fiber optic and substantially maintaining the optical characteristics of the fiber optic, said composition being dielectric,
d) a second protective tube surrounding said plurality of first protective tubes.

26. A fiber optic unit comprising:
a) a plurality of fiber optics,
b) a plurality of first protective tubes, whereby each of said tubes surround each fiber optic,
c) a second protective tube surrounding said plurality of first protective tubes,
d) a composition between the said plurality of first protective tubes and said second protective tube substantially maintaining the optical characteristics of the fiber optic, said composition being dielectric.

27. A fiber optic unit of claim 25, wherein said composition is the composition of claim 1.

28. A fiber optic unit of claim 25, wherein said composition is the composition of claim 6.

29. A fiber optic unit of claim 26, wherein said composition is the composition of claim 1.

30. A fiber optic unit of claim 26, wherein said composition is the composition of claim 6.

31. A fiber optic unit of claim 11, wherein the composition between the fiber optic and the first protective tube is the compound of claim 1, and the composition between the plurality of the first protective tubes and the second protective tube is the composition of claim 1.

32. A fiber optic unit of claim 11, wherein the composition between the fiber optic and the first protective tube is the compound of claim 1, and the composition between the plurality of the first protective tube and the second protective tube is the composition of claim 6.

33. A fiber optic unit of claim 11, wherein the composition between the fiber optic and the first protective tube is the compound of claim 6, and the composition between the plurality of the first protective tube and the second protective tube is the composition of claim 1.

34. A fiber optic unit of claim 11, where composition between the fiber optic and the first protective tube is the compound of claim 6, and the composition between the plurality of the first protective tube and the second protective tube is the composition of claim 6.

35. A method of fabricating a fiber optic unit and including:

a) providing an extrusion die,

b) providing a plurality of optical fibers to said die,

c) providing materials to said die to form a plurality of first protective tubes and a second protective tube,

d) providing to said die a dielectric composition for use in said fiber optic unit to substantially maintain its optical characteristics,

e) extruding a fiber optic unit from said die with said composition between the first protective tube and the fiber optic.

36. A method of fabricating a fiber optic unit and including:

a) providing an extrusion die,

b) providing a plurality of optical fibers to said die,

c) providing to said die materials to form a plurality of first protective tubes and a second protective tube,

d) providing to said die a dielectrical composition for use in said fiber optic unit to substantially maintain its optical characteristics,

e) extruding a fiber optic unit from said die with said composition between the plurality of first protective tube and the second protective tube.

37. A method of claim 35, wherein said composition is the composition of claim 1.

38. A method of claim 35, wherein said composition is the composition of claim 6.

39. A method of claim 36, wherein said composition is the composition of claim 1.

40. A method of claim 36, wherein said composition is the composition of claim 6.

FIG. 1

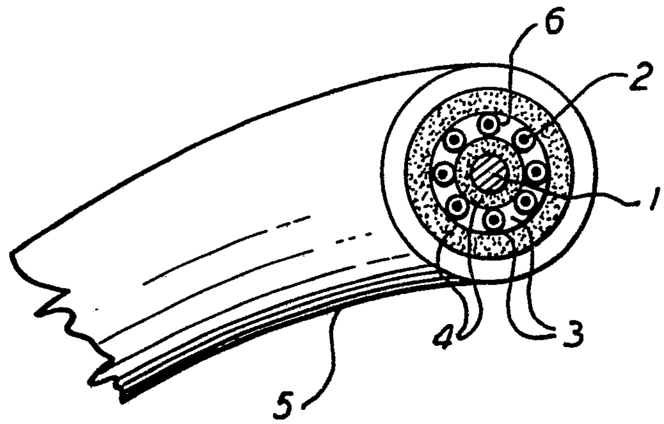


FIG. 2